# EUROPÄISCHE PATENTANMELDUNG

(11) **EP 0 570 353 A1**
(43) Veröffentlichungstag der Anmeldung: **18.11.1993**
(21) Anmeldenummer: 93890022.2
(22) Anmeldetag: 22.02.1993
(51) Int. Cl.: F16L 1/024

(54) **Leitungsrohr, insbesondere für Gas und Wasser**

(30) Priorität: 13.05.1992 AT 975/92
(71) Anmelder: Egger, Karl, A-4203 Altenberg (AT)
(72) Erfinder: Egger, Karl, A-4203 Altenberg (AT)
(74) Vertreter: Hübscher, Heiner, Dipl.-Ing.

(57) **Zusammenfassung**

Ein insbesondere für Gas und Wasser bestimmtes Leitungsrohr aus Kunststoff ist oberflächlich beschichtet. Um eine Ortung eines solchen Rohres nach seiner Verlegung mit Hilfe eines Detektors zu ermöglichen, besteht die sich gegebenenfalls nur über einen Teil der Rohroberfläche erstreckende Beschichtung aus elektrophysikalisch ortbaren Bestandteilen oder enthält wenigstens solche.

## Beschreibung

Die Erfindung bezieht sich auf ein Leitungsrohr, insbesondere für Gas und Wasser, das oberflächlich beschichtet ist.

Oberflächlich beschichtete Leitungsrohre sind bereits bekannt, wobei die Beschichtung meist die Form von Längsstreifen besitzt und das Aufbringen solcher Streifen in der Weise erfolgt, daß der aus dem Hauptextruder für das Kunststoffrohr austretende, noch nicht verfestigte Strang durch einen sogenannten Koextruder geführt wird, in dem Kunststoffpulver oder -granulat unter entsprechender Erwärmung auf den durchlaufenden Strang aufgepreßt und dabei mit diesem zu einer Einheit verschmolzen wird. Um diese Verschmelzung problemlos zu erreichen, wird im Koextruder in der Regel derselbe Kunststoff verwendet wie im Hauptextruder und ihm bloß eine andere Farbe gegeben, um auf dem fertigen Leitungsrohr einen vom übrigen Material abstechenden Längsstreifen zu erzielen, der dann als Montagehilfe oder auch nur zur Verzierung des Leitungsrohres oder -schlauches dient.

Leitungsrohre dieser Art werden meist in Wänden unter Putz verlegt oder auch in Böden eingebracht, wobei sie je nach Verwendungszweck zur Warmwasserleitung, zur Frischwasserleitung oder auch zur Gasleitung dienen. Dabei haben die farbigen Längsstreifen (meist werden drei Streifen um je 90° versetzt angeordnet) die Aufgabe, beim Verlegen der Leitungsrohre das Ausrichten zu erleichtern.

Sobald ein solches Kunststoffrohr in der Wand, Decke oder im Boden verlegt ist und exakte Aufzeichnungen über die Rohranordnung fehlen, ist es praktisch unmöglich, den genauen Rohrverlauf nachträglich zu bestimmen, d. h. es besteht die Gefahr, daß das Rohr bei irgendwelchen Arbeiten, sei es um einen Gegenstand aufzuhängen, ein Regal zu befestigen, eine Zwischenwand zu verankern od. dgl., angebohrt oder durch Nägel bzw. Schrauben verletzt wird, was schwere Schäden mit sich bringen kann. Die Gefahr der Rohrverletzung ist umso größer, als es sich um Langzeitrohre handelt, die mit entsprechender Dauer verlegt bleiben, so daß das Wissen um die genaue Rohranordnung leicht verloren geht. Während elektrische Leitungen mit Hilfe einfacher Detektoren leicht feststellbar sind, können solche Leitungsrohre aus Kunststoff mit derartigen Meßgeräten bisher nicht geortet sein.

Demnach liegt der Erfindung die Aufgabe zugrunde, diese Mängel zu beseitigen und ein Leitungsrohr der eingangs geschilderten Art zu schaffen, das bei einfacher Herstellbarkeit eine gute Ortung auch nach langer Verlegungsdauer ermöglicht.

Die Erfindung löst die gestellte Aufgabe dadurch, daß die sich gegebenenfalls nur über einen Teil der Rohroberfläche erstreckende Beschichtung elektrophysikalisch ortbare Bestandteile enthält oder aus solchen besteht.

Die Beschichtung kann durch Aufkleben von Streifen, durch Aufsintern, Lackieren und dgl. aufgebracht werden. Wesentlich ist aber nur, daß die Beschichtung elektrophysikalisch ortbaren Bestandteile enthält bzw. überhaupt aus diesen besteht, um ein Ansprechen von Detektoren bei der Ortung zu ermöglichen.

Besonders zweckmäßig ist es, wenn die sich nur über einen Teil der Rohroberfläche erstreckende Beschichtung in Form von gegebenenfalls in Punkte oder Striche aufgelösten Längsstreifen ausgebildet ist, weil dann das Ausrichten bei der Montage wie bisher erleichtert wird und außerdem bei der Ortung der ganze Rohrverlauf bestimmt werden kann.

Ein einfaches Herstellungsverfahren der erfindungsgemäßen Leitungsrohre ergibt sich, wenn die Beschichtung in an sich bekannter Weise im Extrusionsverfahren aufgebracht wird. Es können dann die elektrophysikalisch ortbaren Bestandteile zusammen mit dem Kunststoffpulver bzw. -granulat im Koextruder dem aus dem Hauptextruder austretenden Strang zugeführt werden, wo sie zu folge ihrer Mischung mit dem gleichzeitig zugeführten Kunststoff mit dem Material des den Koextruder durchlaufenden Stranges verschmelzen.

Für diese Herstellungsart ist es besonders zweckmäßig, wenn in die Beschichtung Metalle, Metalloxide und/oder Metallsalze eingebetet werden, wobei als Metalle, Aluminium, Zink, Eisen oder Messing, als Metalloxide, Eisenoxid, Chromoxid oder Kupferoxid und schließlich als Metallsalz Bariumtritanat in Frage kommen.

Die Beschichtung kann aber auch aus elektrophysikalisch leitfähigem Kunststoff bestehen oder solchen enthalten.

Sind die ortbaren Bestandteile der Beschichtung magnetisierbar, so können zur Ortung auf ein magnetisches Feld empfindliche Detektoren verwendet werden, und es ergibt sich eine noch sicherere Ortung.

Um eine mechanische Beschädigung der Beschichtung während des Transportes oder der Montage zu vermeiden, kann die elektrophysikalisch ortbare Beschichtung eine Schutzschicht aufweisen, wobei diese Schutzschicht in den meisten Fällen nur eine dünne Haut zu sein braucht.

## Patentansprüche

1. Leitungsrohr, insbesondere für Gas und Wasser, aus Kunststoff, das oberflächlich beschichtet ist, dadurch gekennzeichnet, daß die sich gegebenenfalls nur über einen Teil der Rohroberfläche erstreckende Beschichtung elektrophysikalisch ortbare Bestandteile enthält oder aus solchen besteht.

2. Leitungsrohr nach Anspruch 1, dadurch gekennzeichnet, daß die sich nur über einen Teil der Rohroberfläche erstreckende Beschichtung in Form von gegebenenfalls in Punkte oder Striche aufgelösten Längsstreifen ausgebildet ist.

3. Leitungsrohr nach den Ansprüchen 1 und 2, dadurch gekennzeichnet, daß die Beschichtung in an sich bekannter Weise im Extrusionsverfahren aufgebracht ist.

4. Leitungsrohr nach einem der Ansprüche 1-3, dadurch gekennzeichnet, daß in die Beschichtung Metalle, Metalloxide und/oder Metallsalze eingebetet sind.

5. Leitungsrohr nach einem der Ansprüche 1-3, dadurch gekennzeichnet, daß die Beschichtung aus elektrophysikalisch leitfähigem Kunststoff besteht oder solchen enthält.

6. Leitungsrohr nach einem der Ansprüche 1-4, dadurch gekennzeichnet, daß die ortbaren Bestandteile der Beschichtung magnetisierbar sind.

7. Leitungsrohr nach einem der Ansprüche 1-6, dadurch gekennzeichnet, daß die elektrophysikalisch ortbare Beschichtung eine Schutzschicht aufweist.
